(19) Europäisches Patentamt
European Patent Office
Office européen des brevets

(11) **EP 4 070 449 B1**

(12) **EUROPÄISCHE PATENTSCHRIFT**

(45) Veröffentlichungstag und Bekanntmachung des Hinweises auf die Patenterteilung:
**21.08.2024   Patentblatt 2024/34**

(21) Anmeldenummer: **20803543.6**

(22) Anmeldetag: **06.11.2020**

(51) Internationale Patentklassifikation (IPC):
**H02P 23/00** *(2016.01)*       **H02P 25/22** *(2006.01)*

(52) Gemeinsame Patentklassifikation (CPC):
**H02P 25/22; H02P 23/00**

(86) Internationale Anmeldenummer:
**PCT/EP2020/081307**

(87) Internationale Veröffentlichungsnummer:
**WO 2021/110355 (10.06.2021 Gazette 2021/23)**

(54) **VERFAHREN ZUM BETREIBEN EINER ELEKTRISCHEN MASCHINE**

METHOD FOR OPERATING AN ELECTRIC MACHINE

PROCÉDÉ DE FONCTIONNEMENT D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2019   DE 102019219037**

(43) Veröffentlichungstag der Anmeldung:
**12.10.2022   Patentblatt 2022/41**

(73) Patentinhaber: **Robert Bosch GmbH**
**70442 Stuttgart (DE)**

(72) Erfinder:
• **WEISS, Leonard**
**70839 Gerlingen (DE)**
• **FREITAG, Christian**
**71277 Rutesheim (DE)**

(56) Entgegenhaltungen:
**WO-A1-2019/097627        DE-A1- 102015 215 871**
**DE-A1- 102016 217 887     DE-A1- 102018 205 514**
**DE-A1- 19 532 142**

**Beschreibung**

Die vorliegende Erfindung betrifft ein Verfahren zum Betreiben einer elektrischen Maschine mit einem Stromrichter und mehreren Phasen, sowie eine Recheneinheit und ein Computerprogramm zu dessen Durchführung.

Stand der Technik

Die Druckschriften DE 10 2015 215871 A1, DE 10 2018 205514 A1, DE 10 2016 217887 A1, DE 195 32142 A1, WO 2019/097627 A1 offenbaren Verfahren zum Betreiben elektrischer Maschinen. Elektrische Maschinen, insbesondere bei einem Einsatz in einem Fahrzeug, können motorisch und/oder generatorisch an einem Stromrichter, insbesondere Wechselrichter bzw. Inverter, betrieben werden, der von einem Gleichspannungskreis gespeist wird. Üblich für solche Inverter, auch als Traktionsinverter bezeichnet, ist eine getaktete Ansteuerung von Schaltelementen, insbesondere Halbleiterschaltelementen wie MOSFETs oder IGBTs, beispielsweise im Wege einer Pulsbreitenmodulation (PWM). Dies dient insbesondere dazu, einen erwünschten, beispielsweise möglichst sinus-förmigen Spannungsverlauf zu erhalten.

Bei elektrischen Maschinen (oder Antrieben) im Automotive-Bereich findet in der Regel die Norm ISO 26262 Anwendung, in der die sog. "Automotive Safety Integrity Level" (ASIL) - hierbei handelt es sich um Sicherheitsstufen in Fahrzeugen - definiert werden. Für elektrische Maschinen mit einer ASIL-Einstufung wird in der Regel das erzeugte Drehmoment mit einer Sicherheitslast belegt, d.h. das erzeugte Drehmoment muss eine vorgegebene Genauigkeit aufweisen.

Aus Kostengründen kann das Drehmoment einer elektrischen Maschine anhand gemessener Phasenströme und entsprechender Maschinengleichungen ermittelt werden, ein Drehmomentsensor ist dann nicht nötig. Dabei ist aber eine möglichst genaue Erfassung der Phasenströme wichtig, um den Anforderungen der ISO 26262 zu genügen. Die Phasenströme finden in der Regel Eingang in die Stromregelung, mittels welcher ein Solldrehmoment realisiert werden kann. Ungenau erfasste Phasenströme führen daher zu einem ungenau gestellten Drehmoment, was wiederrum die Verletzung von Sicherheitszielen nach ISO 26262 nach sich ziehen kann.

Aus der DE 10 2012 217 116 A1 ist beispielsweise ein Verfahren bekannt, bei dem Phasenströme während des Betriebs einer solchen elektrischen Maschine ermittelt werden und teils auch gemessen werden.

Offenbarung der Erfindung

Erfindungsgemäß werden ein Verfahren zum Betreiben einer elektrischen Maschine sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung betrifft ein Verfahren zum Betreiben einer elektrischen Maschine mit einem Stromrichter und mehreren Phasen. Bei dem Stromrichter kann es sich beispielsweise um einen Wechselrichter (bzw. Inverter) handeln, bei dem mittels getakteter Ansteuerung von Schaltelementen (z.B. Halbleiterschalter wie MOSFETs oder IGBTs) mit einer Taktfrequenz eine Gleichspannung in eine Wechselspannung gewandelt wird. Eine solche getaktete Ansteuerung der Schaltelemente wird bevorzugt verwendet, um eine sinusförmige Wechselspannung zu erzeugen. Hierzu kann beispielsweise eine sog. Sinus-Dreieck-Modulation zum Einsatz kommen.

Weiterhin werden bei dem Verfahren während eines Betriebs der elektrischen Maschine durch die Phasen fließende Phasenströme ermittelt und für den weiteren Betrieb der elektrischen Maschine verwendet, z.B. zur Regelung eines zu stellenden Drehmoments. Wie schon erwähnt, können die Phasenströme hierzu gemessen werden, z.B. mittels geeigneter Strommesseinrichtungen, denkbar ist z.B. das Messen eines Spannungsabfalls über einen Messwiderstand.

Bei der Messung der Phasenströme ist nun zu berücksichtigen, dass es bestimmte Zeitpunkte gibt, zu denen eine Messung erfolgen sollte, um einen möglichst genauen, aktuellen Wert zu erhalten. Beispielsweise liegt ein idealer Messzeitpunkt entweder in der Mitte der On-Zeit und/oder in der Mitte der Off-Zeit in Bezug auf eine PWM-Periode bei der erwähnten getakteten Ansteuerung. Dies kann dazu führen, dass die einzelnen Phasenströme nicht zum selben Zeitpunkt gemessen werden. Dies ist insbesondere dann der Fall, wenn die Phasen zeitversetzt angesteuert werden, d.h. wenn es also zumindest zwei Phasen gibt, die zueinander versetzt angesteuert werden.

Letzteres ist z.B. bei einer elektrischen Maschine mit zweimal drei Phasen der Fall, bei der ein Zeitversatz zwischen der Ansteuerung der ersten drei Phasen und den weiteren drei Phasen vorliegt bzw. verwendet wird. Anhand dieses Beispiels soll später auch das vorliegende Verfahren näher erläutert werden, es versteht sich jedoch, dass das vorgeschlagene Verfahren nicht für dieses eine Beispiel anwendbar ist, sondern auf beliebige Arten von elektrischen Maschinen mit mehreren Phasen übertragbar ist.

Bei einer Regelung des Drehmoments der elektrischen Maschine, bei der die gemessenen bzw. aktuellen Phasenströme verwendet werden sollen, ist jedoch zu beachten, dass die aktuellen Phasenströme für alle Phasen zu einem bestimmten und insbesondere demselben Zeitpunkt nötig sind, insbesondere als Rückführgröße. Da eine genaue Messung jedoch meist nicht für alle Phasen zum selben Zeitpunkt erfolgen kann, wie vorstehend schon erläutert, ist eine Umrechnung der Phasenströme aller Phasen auf denselben Zeitpunkt vorzunehmen.

Bei einer solchen Umrechnung hat sich nun gezeigt, dass bei einfacher Annahme eines sinusförmigen Verlaufs der Phasenströme Ungenauigkeiten auftreten. Dies liegt insbesondere darin begründet, dass die Verläufe der Phasenströme nicht nur aus einer Grundwelle bestehen, sondern auch verschiedene Oberwellen verschieden starke Beiträge liefern können.

Bei dem vorgeschlagenen Verfahren werden daher die Phasenströme unter Berücksichtigung einer Grundwelle und wenigstens einer Oberwelle eines Stromverlaufs eines jeden Phasenstroms, der typischerweise zumindest im Wesentlichen sinusförmig ist, ermittelt. Dies betrifft Fälle, in denen erfasste bzw. gemessene Phasenströme auf einen gemeinsamen Zeitpunkt umgerechnet werden.

Auf diese Weise kann also z.B. vermieden werden, dass sich eine Variation im Phasenstrom zu einem Messzeitpunkt, die auf einer Oberwelle beruht, als zur Grundwelle gehörig angenommen und fehlerhaft in die Umrechnung einbezogen wird, was zu falschen Werten des Phasenstroms führte.

Die Anzahl und Art der Oberwellen, die hierbei berücksichtigt werden, kann z.B. auf eine individuelle elektrische Maschine oder einen bestimmten Typ elektrischer Maschinen abgestimmt werden. Beispielsweise kann aufgrund von Testmessungen und/oder Simulationen ermittelt worden sein, dass die fünfte und die siebte Oberwelle besonders auffällig sind und entsprechende Korrekturen erfordern. Hierbei können dann die fünfte und die siebte Oberwelle - zusätzlich zur Grundwelle - berücksichtigt werden.

Die zu verschiedenen Zeitpunkten ermittelten Phasenströme können dann auf einen gemeinsamen Zeitpunkt umgerechnet werden und so für den Betrieb oder die Regelung verwendet werden. Insbesondere werden als die dem Betrieb bzw. der Regelung zugrundeliegenden Phasenströme nur die Phasenströme der Grundwelle ermittelt bzw. verwendet.

Wenngleich es besonders bevorzugt ist, wenn basierend auf den ermittelten Phasenströmen eine Regelung der elektrischen Maschine auf ein vorgegebenes Drehmoment erfolgt, so ist es - zusätzlich oder alternativ - ebenso bevorzugt, wenn basierend auf den ermittelten Phasenströmen eine Diagnose der elektrischen Maschine vorgenommen wird und/oder wenn basierend auf den ermittelten Phasenströmen gemessene Phasenströme plausibilisiert werden. In letzterem Fall sind unter den ermittelten Phasenströmen insbesondere die aus den gemessenen Phasenströmen unter Berücksichtigung der Grund- und Oberwellen bestimmten bzw. berechneten Phasenströme zu verstehen. Auch in diesen Fällen ermöglicht das vorgeschlagene Verfahren eine besonderes genaue Ermittlung der Phasenströme. Wie erwähnt, dient zweckmäßigerweise nur die ermittelte Grundwelle als Grundlage für die Regelung.

Besonders zweckmäßig ist der Einsatz des vorgeschlagenen Verfahrens bei elektrischen Maschinen, die in Fahrzeugen mit höheren Bordnetzspannungen, z.B. 48 V oder höher, eingesetzt werden, insbesondere als Antriebsmotoren bzw. Traktionsmaschinen. Ebenso kann dies aber bei anderen, insbesondere ASILrelevanten, elektrischen Maschinen eingesetzt werden, z.B. solchen, die bei einer elektrischen Lenkung eingesetzt werden.

Eine erfindungsgemäße Recheneinheit, z.B. ein Steuergerät, insbesondere Motorsteuergerät, eines Kraftfahrzeugs, oder eine Steuer- und/oder Regeleinheit einer elektrischen Maschine, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

Kurze Beschreibung der Zeichnungen

Figur 1   zeigt schematisch eine elektrische Maschine mit Stromrichter, bei der ein erfindungsgemäßes Verfahren durchführbar ist.

Figur 2   zeigt schematisch einen Ablauf eines erfindungsgemäßen Verfahrens in einer bevorzugten Ausführungsform.

Ausführungsform(en) der Erfindung

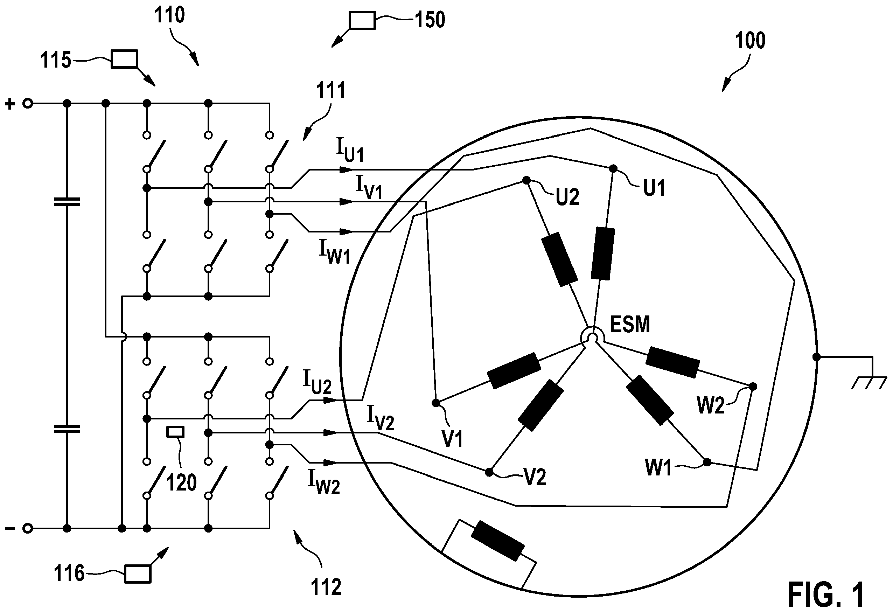

In Figur 1 ist schematisch eine elektrische Maschine 100 mit Stromrichter 110 dargestellt, bei der ein erfindungsgemäßes Verfahren durchführbar ist. Die elektrische Maschine weist (in einem nicht dargestellten Stator) sechs Phasen(wicklungen) auf, die zwei Drehstromgruppen als Teilsysteme bilden und mit U1, V1 und W1 sowie U2, V2 und W2 bezeichnet sind. Dabei gilt zwischen den beiden Teilsystemen U1, V1, W1 sowie U2, V2, W2 beispielsweise ein elektrischer Phasenversatz von 30°. Eine Drehstromgruppe ist durch eine elektrische Verbindung der Phasenwicklungen im Ständer, hier beispielsweise einen gemeinsamen Sternpunkt, charakterisiert, ist jedoch im Ständer nicht elektrisch mit Phasen anderer Drehstromgruppen verbunden und kann daher eine eigenes Ansteuerschema haben, welches im Prinzip unterschiedlich von Ansteuerschemata anderer Drehstromgruppen sein kann.

Der Stromrichter 110 weist zwei Teile 111 und 112 auf, die jeweils als übliche Brückengleichrichter ausgebildet sind, sechs (nicht näher bezeichnete) Schaltelemente, z.B. Halbleiterschalter wie MOSFETS, aufweisen und jeweils zum Ansteuern (d.h. zum Verbinden mit den Gleichspannungsanschlüssen des Stromrichter) eines der Teilsysteme U1, V1, W1 bzw. U2, V2, W2 dienen. Über eine Kapazität, hier beispielsweise in Form von zwei (nicht näher bezeichnete) Kondensatoren, ist der Stromrichter mit einem positiven und einem negativen Anschluss z.B. in ein Bordnetz eines Fahrzeugs als Gleichspannungsanschlüsse eingebunden. Zudem ist beispielhaft eine Steuer- und/oder Regeleinheit 150 gezeigt, die zum Ansteuern des Stromrichters 110, insbesondere zum Öffnen und Schließen der Schaltelemente, dient. Es versteht sich, dass eine solche auch in den Stromrichter integriert sein kann.

Die getaktete Ansteuerung der beiden Teilsysteme U1, V1, W1 bzw. U2, V2, W2 erfolgt hier über zwei getrennte Ansteuerschaltungen 115 und 116, und mit einem Zeitversatz von z.B. 25 µs. Durch die Phasen fließt dabei jeweils ein Phasenstrom $I_{U1}$, $I_{V1}$ und $I_{W1}$ bzw. $I_{U2}$, $I_{V2}$ und $I_{W2}$ Diese Phasenströme können z.B. mittels eines Stromsensors bzw. einer Strommesseinrichtung - eine solche ist schematisch und beispielhaft mit 120 bezeichnet - gemessen bzw. erfasst werden.

Wie schon erwähnt, liegt ein idealer Messzeitpunkt z.B. in der Mitte der On-Zeit und/oder in der Mitte der Off-Zeit in Bezug auf eine PWM-Periode der erwähnten getakteten Ansteuerung. Damit ist jedenfalls nicht für alle Phasen zum selben Zeitpunkt eine Messung des jeweiligen Phasenstroms möglich.

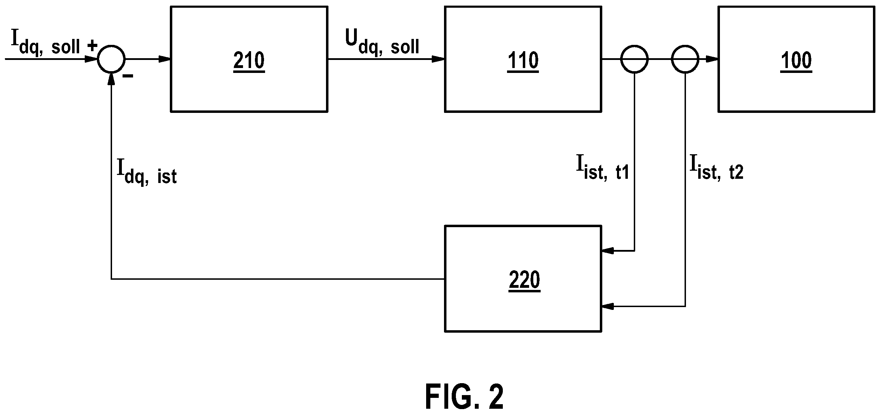

In Figur 2 ist schematisch ein Ablauf eines erfindungsgemäßen Verfahrens in einer bevorzugten Ausführungsform dargestellt. Hierzu kann die elektrische Maschine 100 mit Stromrichter 110 wie in Figur 1 gezeigt verwendet werden. Insbesondere ist hier ein Regelschema zum Regeln auf einen bestimmten Strom $I_{dq,soll}$ (in sog. d-q-Koordinaten), der ein Drehmoment der elektrischen Maschine angibt, gezeigt.

Eine Differenz des Sollwerts $I_{dq,soll}$ und des zughörigen Istwerts $I_{dq,ist}$ wird in einem Regler 210 gegeben, in dem entsprechende Stellwerte für die Spannung, $U_{dq,soll}$, ermittelt werden. Diese können, ggf. nach Umrechnung in tatsächliche Spannungswerte für die Phasen U1, V1, W1 bzw. U2, V2, W2, am Stromrichter 110 eingestellt werden, was in entsprechenden Phasenströmen und damit einem Drehmoment der elektrischen Maschine 100 resultiert.

Gemessen werden dabei die tatsächlichen Phasenströme $I_{ist,t1}$ und $I_{ist,t2}$, wie in Bezug auf Figur 1 erwähnt, und zwar zu verschiedenen Zeitpunkten $t_1$ und $t_2$. Die Phasenströme $I_{ist,t1}$ stehen dabei für die Istwerte der Phasenströme $I_{U1}$, $I_{V1}$ und $I_{W1}$, die Phasenströme $I_{ist,t2}$ stehen für die Istwerte der Phasenströme $I_{U2}$, $I_{V2}$ und $I_{W2}$. Dabei ist zu beachten, dass - wie schon in Bezug auf Figur 1 erwähnt - die Ansteuerung der beiden Teilsysteme U1, V1, W1 bzw. U2, V2, W2 zeitlich versetzt erfolgt, was auch mit einer - bezogen auf den jeweils idealen Messzeitpunkt - zeitlich versetzte Messung der Phasenströme in den beiden Teilsystemen einhergeht, also zu den Zeitpunkten $t_1$ bzw. $t_2$.

Diese tatsächlichen Phasenströme $I_{ist,t1}$ und $I_{ist,t2}$ werden im Rahmen einer Transformation 220 - unter Berücksichtigung von Grundwelle und Oberwellen - in den aktuellen Istwert $I_{dq,ist}$ umgerechnet. Dies soll nachfolgend anhand entsprechender Gleichungen und des bis hier beschriebenen, beispielhaften Systems näher erläutert werden.

Es sollen dabei ein symmetrisches Design der elektrischen Maschine und eine symmetrische Ansteuerung angenommen werden. Die sechs Phasenströme ergeben sich bei reiner Grundwellenbetrachtung wie folgt:

$$I_{U1}(t_1) = \hat{I}_{U1} \cdot \sin\left(\omega t_1 + \varphi\right),$$

$$I_{V1}(t_1) = \hat{I}_{V1} \cdot \sin\left(\omega t_1 - \frac{2\pi}{3} + \varphi\right),$$

$$I_{W1}(t_1) = \hat{I}_{W1} \cdot \sin\left(\omega t_1 - \frac{4\pi}{3} + \varphi\right),$$

$$I_{U2}(t_2) = \hat{I}_{U2} \cdot \sin\left( \omega t_2 - \frac{\pi}{6} + \varphi \right),$$

$$I_{V2}(t_2) = \hat{I}_{V2} \cdot \sin\left( \omega t_2 - \frac{2\pi}{3} - \frac{\pi}{6} + \varphi \right)$$

und

$$I_{W2}(t_2) = \hat{I}_{W2} \cdot \sin\left( \omega t_2 - \frac{4\pi}{3} - \frac{\pi}{6} + \varphi \right).$$

Dabei ist mit $\hat{I}_{U1}$ die Amplitude des Phasenstroms $I_{U1}$ angegeben, entsprechendes gilt für die anderen Phasenströme. Mit $\varphi$ ist ein Phasenwinkel angegeben. Die Phasenströme des zweiten Teilsystems zum Zeitpunkt $t_2$ können nun auf den Zeitpunkt $t_1$ umgerechnet werden (im Beispiel gilt dabei $t_2$ - $t_1$ = 25 µs):

$$I_{U2}(t_1) = \hat{I}_{U2} \cdot \sin\left( \omega t_1 - \frac{\pi}{6} + \varphi \right),$$

$$I_{V2}(t_1) = \hat{I}_{V2} \cdot \sin\left( \omega t_1 - \frac{2\pi}{3} - \frac{\pi}{6} + \varphi \right)$$

und

$$I_{W2}(t_1) = \hat{I}_{W2} \cdot \sin\left( \omega t_1 - \frac{4\pi}{3} - \frac{\pi}{6} + \varphi \right).$$

Bei dieser Umrechnung wird der Phasenstrom als rein sinusförmig angenommen, mögliche Oberwellen werden hingegen vernachlässigt und deren Information steht der Phasenstromregelung aufgrund der Annahme einer falschen Grundwelle, wie vorstehend schon erwähnt, nicht zur Verfügung. Eine erhöhte Drehmomentwelligkeit und eine mögliche Verletzung des Sicherheitsziels (aufgrund einer ASIL-Anforderung) wären die Folge. Mit dem hier im Rahmen der Erfindung vorgeschlagenen Verfahren können nun neben der Grundwelle des Phasenstroms auch (auffällige) Oberwellen betrachtet werden, somit kann die Drehmomentwelligkeit reduziert werden.

Durch die Nutzung aller gemessenen Phasenströme an den Zeitpunkten $t_1$ und $t_2$ kann je nach Anzahl der gemessenen Ströme auf auffällige Oberwellen geschlossen werden. Am Beispiel einer 2x3-Phasigen elektrischen Maschine mit elektrischen 30° Phasenversatz zwischen den Teilsystemen (wie in Bezug auf Figur 1 erläutert) lässt sich folgender mathematischer Zusammenhang für beispielhaft zwei weitere Oberwellen (hier wurden die fünfte und die siebte als auffällige Oberwellen ausgewählt) in Phasenströmen herleiten:

$$I_{U1}(t_1) = \hat{I}_{U1,G} \cdot \sin\left( \omega t_1 + \varphi_{U1,G} \right) + \hat{I}_{U1,5} \cdot \sin\left( 5 \cdot \omega t_1 + \varphi_{U1,5} \right) + \hat{I}_{U1,7} \cdot \sin\left( 7 \cdot \omega t_1 + \varphi_{U1,7} \right).$$

Dabei geben $\hat{I}_{U1,G}$, $\hat{I}_{U1,5}$ und $\hat{I}_{U1,7}$ die Amplituden der Phasenströme in der Grundwelle, der fünften Oberwelle bzw. der siebten Oberwelle an. Die entsprechenden Phasenwinkel sind mit $\varphi_{U1,G}$, $\varphi_{U1,5}$ und $\varphi_{U1,7}$ bezeichnet. Auf die gleiche Weise lassen sich entsprechend für die weiteren fünf Phasen mit entsprechenden Zeiten $t_1$ bzw. $t_2$ sowie entsprechenden Amplituden und Phasenwinkeln Gleichungen angeben, die die fünfte und siebte Oberwelle berücksichtigen.

Anhand des symmetrischen Designs der elektrischen Maschine sowie der symmetrischen Ansteuerung lassen sich noch die Annahmen ableiten bzw. treffen, dass die Grundwelle und die Oberwellen die gleiche Amplitude aufweisen, dass also für die Grundwelle z.B. gilt:

$$\hat{I}_{G} = \hat{I}_{U1,G} = \hat{I}_{V1,G} = \hat{I}_{W1,G} = \hat{I}_{U2,G} = \hat{I}_{V2,G} = \hat{I}_{W2,G}.$$

Entsprechendes gilt dann für die fünfte und siebte Oberwelle mit den Amplituden $\hat{I}_5$ und $\hat{I}_7$. Ebenso kann die Annahme abgeleitet bzw. getroffen werden, dass die Phasenwinkel jeweils gleich sind, d.h. dass für die Grundwelle z.B. gilt:

$$\varphi_{\mathrm{G}} = \varphi_{\mathrm{U1,G}} = \varphi_{\mathrm{V1,G}} = \varphi_{\mathrm{W1,G}} = \varphi_{\mathrm{U2,G}} = \varphi_{\mathrm{V2,G}} = \varphi_{\mathrm{W2,G}}.$$

Entsprechendes gilt dann für die fünfte und siebte Oberwelle mit den Phasenversätzen bzw. Phasenwinkeln $\varphi_5$ und $\varphi_7$.

Mit diesen Annahmen ergeben sich sechs Gleichungen mit sechs Unbekannten (den Amplituden: $\hat{I}_G$, $\hat{I}_5$, $\hat{I}_7$ sowie den Phasenwinkeln $\varphi_G$, $\varphi_5$, $\varphi_7$), die durch einfache Mathematik bestimmt werden können. Werden die Phasenströme nicht alle zum gleichen Zeitpunkt gemessen, wie es z.B. beim zeitversetzten Ansteuern der Phasen der beiden Teilsysteme (wie vorstehend erläutert) erfolgt, können nun alle sechs Phasenströme für einen Zeitpunkt zusammen mit ihren dominanten Oberwellen bestimmt werden.

Im folgenden Beispiel wird der Phasenstrom der Phase U2 für den Zeitpunkt $t_1$ zusammen mit der fünften und siebten Oberwelle berechnet:

$$I_{U2}(t_1) = \hat{I}_{\mathrm{G}} \cdot \sin\left(\omega t_1 - \frac{\pi}{6} + \varphi_{\mathrm{G}}\right) + \hat{I}_5 \cdot \sin\left(5 \cdot \omega t_1 + \varphi_5\right) + \hat{I}_7 \cdot \sin\left(7 \cdot \omega t_1 + \varphi_7\right).$$

Entsprechend können z.B. die Phasenströme der Phasen V2 und W2 für den Zeitpunkt $t_1$ zusammen mit der fünften und siebten Oberwelle berechnet werden. Auf diese Weise können also die Phasenströme der Phasen mit zeitversetzter Ansteuerung sehr genau in entsprechende Phasenströme zum Zeitpunkt der Ansteuerung der Phasen ohne den Zeitversatz umgerechnet werden. Daraus wiederum kann dann der Istwert Idq,ist ermittelt werden, sodass die Regelung ablaufen kann.

Weiterhin müssen bei einem 2x3-phasigen System die Gleichungen

$$I_{\mathrm{U1}} + I_{V1} + I_{W1} = 0 \ \text{ und } \ I_{\mathrm{U2}} + I_{V2} + I_{W2} = 0$$

gelten, wodurch neben den sechs Stromgleichungen zwei weitere Gleichungen vorhanden sind, sodass auch noch eine dritte Oberwelle bestimmt werden könnte. Auf diese Weise werden acht Gleichungen mit acht Unbekannten unter den Annahmen wie oben beschrieben erhalten. Allgemein können auf diese Weise für ein nx3-phasiges System 2n-1 Oberwellen zusätzlich zu der Grundwelle berücksichtigt werden.

Im Rahmen der Erfindung wird die elektrische Maschine nun vorzugsweise unter Berücksichtigung nur der ermittelten Grundwelle bzw. von Stromwerten der Grundwelle betrieben, z.B. hinsichtlich ihres Drehmoments geregelt.

**Patentansprüche**

1. Verfahren zum Betreiben einer elektrischen Maschine (100) mit einem Stromrichter (110) und mehreren Phasen (U1, V1, W1, U2, V2, W2), bei dem während eines Betriebs der elektrischen Maschine (100) durch die Phasen fließende Phasenströme ($I_{U1}$, $I_{V1}$, $I_{W1}$, $I_{U2}$, $I_{V2}$, $I_{W2}$) ermittelt und für den weiteren Betrieb der elektrischen Maschine (100) verwendet werden,
   **dadurch gekennzeichnet, daß** die Phasenströme ($I_{U1}$, $I_{V1}$, $I_{W1}$, $I_{U2}$, $I_{V2}$, $I_{W2}$) unter Berücksichtigung einer Grundwelle und wenigstens einer Oberwelle eines Stromverlaufs eines jeden Phasenstroms ermittelt werden,
   wobei die Phasenströme (IU1, IV1, IW1, IU2, IV2, IW2) für einen gemeinsamen Zeitpunkt (t1) ermittelt werden,
   wobei die Phasenströme zu verschiedenen Zeitpunkten (t1, t2) gemessen und in die Phasenströme (IU1, IV1, IW1, IU2, IV2, IW2) für den gemeinsamen Zeitpunkt (t1) umgerechnet werden.

2. Verfahren nach Anspruch 1, bei dem wenigstens zwei der Phasen (U1, V1, W1, U2, V2, W2) in dem Stromrichter zeitversetzt angesteuert werden.

3. Verfahren nach einem der vorstehenden Ansprüche, bei dem die mehreren Phasen (U1, V1, W1, U2, V2, W2) in wenigstens zwei Drehstromgruppen unterteilt werden, und jeweils zwei der wenigstens zwei Drehstromgruppen in dem Stromrichter zeitversetzt angesteuert werden.

4. Verfahren nach einem der vorstehenden Ansprüche, wobei die Phasenströme ($I_{U1}$, $I_{V1}$, $I_{W1}$, $I_{U2}$, $I_{V2}$, $I_{W2}$) in Phasenströme der Grundwelle und der wenigstens einen Oberwelle aufgeteilt werden.

5. Verfahren nach Anspruch 4, wobei als die Phasenströme ($I_{U1}$, $I_{V1}$, $I_{W1}$, $I_{U2}$, $I_{V2}$, $I_{W2}$) nur die Phasenströme der Grundwelle ermittelt werden.

6. Verfahren nach einem der vorstehenden Ansprüche, bei dem basierend auf den ermittelten Phasenströmen ($I_{U1}$, $I_{V1}$, $I_{W1}$, $I_{U2}$, $I_{V2}$, $I_{W2}$) eine Regelung der elektrischen Maschine (100) auf ein vorgegebenes Drehmoment erfolgt.

7. Verfahren nach einem der vorstehenden Ansprüche, bei dem basierend auf den ermittelten Phasenströmen ($I_{U1}$, $I_{V1}$, $I_{W1}$, $I_{U2}$, $I_{V2}$, $I_{W2}$) eine Diagnose der elektrischen Maschine (100) vorgenommen wird.

8. Verfahren nach einem der vorstehenden Ansprüche, bei dem basierend auf den ermittelten Phasenströmen ($I_{U1}$, $I_{V1}$, $I_{W1}$, $I_{U2}$, $I_{V2}$, $I_{W2}$) gemessene Phasenströme plausibilisiert werden.

9. Recheneinheit (150), die dazu eingerichtet ist, alle Verfahrensschritte eines Verfahrens nach einem der vorstehenden Ansprüche durchzuführen.

10. Computerprogramm, das eine Recheneinheit (150) dazu veranlasst, alle Verfahrensschritte eines Verfahrens nach einem der Ansprüche 1 bis 8 durchzuführen, wenn es auf der Recheneinheit (150) ausgeführt wird.

11. Maschinenlesbares Speichermedium mit einem darauf gespeicherten Computerprogramm nach Anspruch 10.

**Claims**

1. Method for operating an electric machine (100) comprising a power converter (110) and a plurality of phases (U1, V1, W1, U2, V2, W2), in which, during operation of the electric machine (100), phase currents ($I_{U1}$, $I_{V1}$, $I_{W1}$, $I_{U2}$, $I_{V2}$, $I_{W2}$) flowing through the phases are determined and used for the continued operation of the electric machine (100), **characterized in that**

   the phase currents ($I_{U1}$, $I_{V1}$, $I_{W1}$, $I_{U2}$, $I_{V2}$, $I_{W2}$) are determined taking into consideration a fundamental and at least one harmonic of a current characteristic of each phase current,
   wherein the phase currents (IU1, IV1, IW1, IU2, IV2, IW2) are determined for a common time (t1), wherein the phase currents are measured at different times (t1, t2) and converted into the phase currents (IU1, IV1, IW1, IU2, IV2, IW2) for the common time (t1).

2. Method according to Claim 1, in which at least two of the phases (U1, V1, W1, U2, V2, W2) are driven so as to have a time offset in the power converter.

3. Method according to one of the preceding claims, in which the plurality of phases (U1, V1, W1, U2, V2, W2) are divided into at least two three-phase current groups, and in each case two of the at least two three-phase current groups are driven so as to have a time offset in the power converter.

4. Method according to one of the preceding claims, wherein the phase currents ($I_{U1}$, $I_{V1}$, $I_{W1}$, $I_{U2}$, $I_{V2}$, $I_{W2}$) are split into phase currents of the fundamental and the at least one harmonic.

5. Method according to Claim 4, wherein only the phase currents of the harmonic are determined as the phase currents ($I_{U1}$, $I_{V1}$, $I_{W1}$, $I_{U2}$, $I_{V2}$, $I_{W2}$).

6. Method according to one of the preceding claims, in which closed-loop control of the electric machine (100) in respect of a preset torque takes place on the basis of the determined phase currents ($I_{U1}$, $I_{V1}$, $I_{W1}$, $I_{U2}$, $I_{V2}$, $I_{W2}$).

7. Method according to one of the preceding claims, in which a diagnosis of the electric machine (100) is performed on the basis of the determined phase currents ($I_{U1}$, $I_{V1}$, $I_{W1}$, $I_{U2}$, $I_{V2}$, $I_{W2}$).

8. Method according to one of the preceding claims, in which measured phase currents are plausibility-checked on the basis of the determined phase currents ($I_{U1}$, $I_{V1}$, $I_{W1}$, $I_{U2}$, $I_{V2}$, $I_{W2}$).

**9.** Arithmetic logic unit (150), which is designed to perform all of the method steps of a method according to one of the preceding claims.

**10.** Computer program, which instructs an arithmetic logic unit (150) to perform all of the method steps of a method according to one of Claims 1 to 8 when it is run on the arithmetic logic unit (150).

**11.** Machine-readable storage medium having a computer program according to Claim 10 stored thereon.

## Revendications

**1.** Procédé permettant de faire fonctionner une machine électrique (100) comprenant un convertisseur de courant (110) et plusieurs phases (U1, V1, W1, U2, V2, W2), dans lequel des courants de phase ($I_{u1}$, $I_{v1}$, $I_{w1}$, $I_{u2}$, $I_{v2}$, $I_{w2}$) circulant à travers les phases sont établis pendant le fonctionnement de la machine électrique (100) et sont utilisés pour la suite du fonctionnement de la machine électrique (100),

caractérisé en ce que les courants de phase ($I_{u1}$, $I_{v1}$, $I_{w1}$, $I_{u2}$, $I_{v2}$, $I_{w2}$) sont établis en tenant compte d'une onde fondamentale et d'au moins une harmonique d'un profil de courant de chaque courant de phase, dans lequel les courants de phase (IU1, IV1, IW1, IU2, IV2, IW2) sont établis pour un instant commun (t1), dans lequel les courants de phase sont mesurés à différents instants (t1, t2) et sont convertis en courants de phase (IU1, IV1, IW1, IU2, IV2, IW2) pour l'instant commun (t1).

**2.** Procédé selon la revendication 1, dans lequel au moins deux des phases (U1, V1, W1, U2, V2, W2) sont pilotées de manière différée dans le convertisseur de courant.

**3.** Procédé selon l'une quelconque des revendications précédentes, dans lequel les plusieurs phases (U1, V1, W1, U2, V2, W2) sont divisées en au moins deux groupes de courant triphasé, et respectivement deux des au moins deux groupes de courant triphasé sont pilotés de manière différée dans le convertisseur de courant.

**4.** Procédé selon l'une quelconque des revendications précédentes, dans lequel les courants de phase ($I_{u1}$, $I_{v1}$, $I_{w1}$, $I_{u2}$, $I_{v2}$, $I_{w2}$) sont divisés en courants de phase de l'onde fondamentale et de ladite au moins une harmonique.

**5.** Procédé selon la revendication 4, dans lequel seuls les courants de phase de l'onde fondamentale sont établis en tant que courants de phase ($I_{u1}$, $I_{v1}$, $I_{w1}$, $I_{u2}$, $I_{v2}$, $I_{w2}$).

**6.** Procédé selon l'une quelconque des revendications précédentes, dans lequel une régulation de la machine électrique (100) sur un couple prédéfini est effectuée sur la base des courants de phase ($I_{u1}$, $I_{v1}$, $I_{w1}$, $I_{u2}$, $I_{v2}$, $I_{w2}$) établis.

**7.** Procédé selon l'une quelconque des revendications précédentes, dans lequel un diagnostic de la machine électrique (100) est effectué sur la base des courants de phase ($I_{u1}$, $I_{v1}$, $I_{w1}$, $I_{u2}$, $I_{v2}$, $I_{w2}$) établis.

**8.** Procédé selon l'une quelconque des revendications précédentes, dans lequel la plausibilité des courants de phase est établie sur la base des courants de phase ($I_{u1}$, $I_{v1}$, $I_{w1}$, $I_{u2}$, $I_{v2}$, $I_{w2}$) établis.

**9.** Unité de calcul (150) qui est conçue pour exécuter toutes les étapes de procédé d'un procédé selon l'une quelconque des revendications précédentes.

**10.** Programme informatique qui amène une unité de calcul (150) à exécuter toutes les étapes de procédé d'un procédé selon l'une quelconque des revendications 1 à 8 lorsqu'il est exécuté sur l'unité de calcul (150).

**11.** Support de stockage lisible par machine, sur lequel est stocké un programme informatique selon la revendication 10.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015215871 A1
- DE 102018205514 A1
- DE 102016217887 A1
- DE 19532142 A1
- WO 2019097627 A1
- DE 102012217116 A1